# EUROPEAN PATENT SPECIFICATION

(11) **EP 0 678 997 B1**
(45) Date of publication and mention of the grant of the patent: **29.05.2002**
(21) Application number: 95104052.6
(22) Date of filing: 20.03.1995
(51) Int. Cl.: H04L 12/56

(54) **Improvements in or relating to ATM communication systems**
Verbesserungen in ATM-Kommunikationsystemen
Améliorations apportées à des systèmes de communication ATM

(30) Priority: 20.04.1994 GB 9407806
(43) Date of publication of application: 25.10.1995
(73) Proprietor: ROKE MANOR RESEARCH LIMITED, Romsey, Hampshire, SO51 0ZN (GB)
(72) Inventor: Hayter, Andrew Timothy, Bitterne Park, Southampton SO18 1LN (GB); Davis, Simon Paul, Romsey, Hampshire SO51 7LX (GB)
(74) Representative: Allen, Derek

(56) References cited:
- WO-A-86/02510
- IEEE COMMUNICATIONS MAGAZINE, vol. 32, no. 3, March 1994 USA, pages 86-98, P. NEWMAN 'ATM local area networks'
- IBM TECHNICAL DISCLOSURE BULLETIN, vol. 37, no. 2a, February 1994 NEW YORK US, pages 243-246, 'MAC layer handling of preemptive and nonpreemptive priorities in buffer-insertion LANs'

## Description

This invention relates to asynchronous transfer mode (ATM) communication systems.

ATM communication systems comprise networks and switches required to support a mixture of traffic including bursty traffic. By its nature, bursty traffic requires high bit-rate transmission for a part of the time and little or no transmission for the rest of the time. In order to efficiently use the bit-rate available in a network, it is necessary to allocate to a connection a lower bit-rate than its peak bit-rate such that the total peak bit-rate of all connections is greater than the bit-rate of the network links in combination.

ATM cells destined for a particular output port of a switch, will enter the switch from many different input ports. The total instantaneous rate of these cell flows may be greater than the output port of an ATM switching network (ASN) can sustain, and thus a temporary overload of the output port may occur. Reducing the output port average load may reduce the probability of this overload to an operational acceptable level, but this results in a low utilisation of the network which is not generally acceptable.

In an alternative approach, large buffers may be included in an ATM switch which serve to buffer the overload cells causing them to be delayed so that they can be transmitted at the peak rate. One of the problems with large buffers, however, is that the transmission of ATM cells across a switch becomes very complex and requires organising in a fair manner. This problem may however be satisfactorily overcome by means of a technique known as 'Dynamic Bandwidth Allocation' (DBA) which may be used to share fairly the bandwidth available between data input queues to a switch. The operation of DBA forms the subject of and is described in our co-pending patent application number GB2272820 to which attention is hereby directed.

Although the DBA protocol described in our co-pending patent application number GB 2272820 is satisfactory for most purposes, there is a requirement for a new service, which is characterised as being loss sensitive but delay insensitive, i.e. intolerant of cell loss but tolerant of longer than usual delays and it will hereinafter be referred to as 'Available Bit-Rate' (ABR) service. This new proposed ABR service is intended for system users which require to move data around but do not mind how long it takes. The ABR service is also useful for network operators because it may be implemented by buffering data at the ingress of a switch and only sending it across a switch core when bandwidth is not being used for any other services, which thus increases network utilisation and profitability. It would be desirable to provide a system having both DBA and ABR but known DBA systems do not facilitate this.

It is therefore an important object of the present invention to provide an ATM communication system having DBA, which will also provide for ABR service traffic.

It is probably worth mentioning at this juncture that methods of stopping data arriving at an ingress of a switch, such that ingress buffers are not caused to overflow, is a separate problem which will not hereinafter be addressed.

Reference is also made to the paper "ATM Local Area Networks" by Peter Newman, published in IEEE Communications Magazine, March 1994, on pages 86 through 98. In this paper, the concept (inter alia) of ABR, or " Best-Effort Service", is addressed, and the separate queuing of ABR and guaranteed traffic is mentioned. When addressing the "loss mechanisms" (i.e. the ways of dealing with ABR traffic that is displaced by traffic of higher priority), however, the paper outlines three approaches, only one of which appears to be considered as reasonably satisfactory. This approach involves discarding a random selection of complete packets of ABR data when a buffer exceeds a threshold. The present invention, on the other hand, provides a practical and powerful loss mechanism, as described hereinafter, that is based upon controlled resource allocation.

According to the present invention there is provided an asynchronous transfer mode ("ATM") communication system having dynamic bandwidth allocation ("DBA"), comprising storage means for DBA traffic, which storage means includes dedicated storage means for available bit-rate ("ABR") traffic; the system providing for the allocation of ABR bandwidth requests after all other DBA bandwidth allocations have been satisfied, and being characterised by the provision of means for queuing ABR traffic until the required bandwidth therefor becomes available; and resource allocation means capable of determining bandwidth available for data transmission; said resource allocation means including means for allocating bandwidth to said ABR traffic in dependence upon its availability and for clearing down ABR traffic and the bandwidth allocated thereto, but not yet fully used, when said allocated bandwidth is required for other DBA traffic of higher priority than the ABR traffic; thereby temporarily decreasing the transmission rate of ABR traffic.

The ATM communication system may comprise a plurality of statistical multiplexer units (SMUs) on an "input side" of a switch, and a plurality of SMUs on the "output side" of the switch, the "input side" SMUs comprising a plurality of stores, one for each "output side" SMU, in which ATM cells for transmission across the switch are stored, each store on the "input side" of the switch being operatively associated with a server, the servers being controlled in accordance with the DBA protocol by "input side" resource allocation means, so as to effect transmission as aforesaid in a fair manner.

The resource allocation means may include a RAM table for storing data appertaining to the bandwidth or bit rate allocated to ABR traffic to each of the "output side" SMUs.

Each SMU on the "output side" of the switch may include an ABR request store which forms a part of "output side" resource allocation means, within which ABR store ABR bandwidth requests are stored; the "output side" resource allocation means being arranged to provide acknowledgement signals indicative of resource availability, which acknowledgement signals are transmitted across the switch to the 'input side' resource allocation means so as appropriately to initiate data transmission across the switch.

It is important to appreciate that these acknowledgement signals not only indicate in respect of each 'output side' SMU when ABR bandwidth has become available, but also when allocated ABR bandwidth should be withdrawn for the time being, thereby to make available bandwidth for other (higher priority) DBA traffic.

It should be understood that DBA bandwidth resource requests and acknowledgement signals are transmitted across the switch to facilitate normal DBA operation and that dedicated ABR requests and acknowledgements are additionally transmitted and stored as appropriate. It is therefore necessary in each 'output side' SMU to provide storage means in which ABR bandwidth requests are stored separately from all other DBA bandwidth requests. In this way bandwidth resource allocation can be managed efficiently such that ABR, ATM cells are transmitted only when all other DBA ATM cell traffic has been catered for.

One embodiment of the invention will now be described by way of example only, with reference to the accompanying drawings, in which:
FIGURE 1 is a generally schematic block diagram of a part of an ATM system showing how ABR requests and acknowledgements are transmitted across a switch; and
FIGURE 2 is a generally schematic block diagram showing 'clear-down' operation of the system shown in Figure 1, wherein appropriate parts bear the same numerical designations.

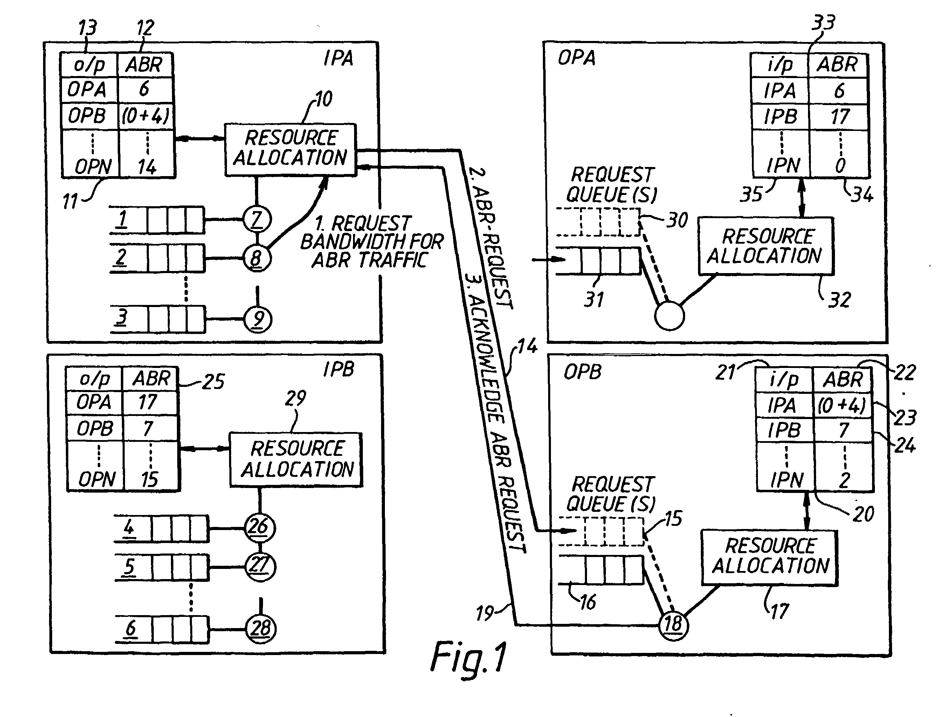

Referring now to Figure 1, an ATM system comprises a plurality of statistical multiplexing units (SMU's), only two of which, IPA and IPB are shown. The SMU's such as IPA and IPB on the 'input side' of a switch (not shown) are arranged in communication across the switch with a plurality of SMU's on the 'output side' only two of which designated OPA and OPB respectively are shown. It will be appreciated that although only two SMU's are shown on the 'input side' and 'output side' respectively of the switch, larger numbers of SMU's will be provided in accordance with the size of an installation. Within each SMU a plurality of stores are provided, within which stores ATM cells for transmission across the switch are stored. Thus in the SMU IPA, stores 1, 2 and 3 are shown and similarly in SMU IPB stores 4, 5 and 6 are shown, each 'input side' SMU having a dedicated store for each SMU on the 'output side' of the switch. Requests are triggered from the stores 1, 2 and 3 and are fed via servers 7, 8 and 9 respectively to a resource allocator 10 which comprises a RAM table of bandwidth availability on the 'output side' of the switch. The resource allocator 10 is also provided with information appertaining to the class of service to which particular ATM cells relate. Thus priority bandwidth resource allocation becomes possible.

The parts of the system thus far described are common to a DBA system of the kind described in our co-pending GB patent application as referred to above. In order, however, to provide for an ABR service the resource allocation unit 10 is arranged additionally to include a RAM table 11 which includes data appertaining to the number, as shown in column 12, of ABR bandwidth units for transmission and as shown in column 13 their destination on the 'output side' of the switch. Thus as can be seen from the RAM table 11, that the SMU, OPA on the 'output side' of the switch has an ABR bandwidth allocation of six bandwidth units; the SMU, OPB has requested four bandwidth units; and been granted zero bandwidth units and the SMU OPN has been granted a bandwidth allocation of fourteen bandwidth units.

As shown schematically, ABR bandwidth requests for transmission from IPA to OPB are fed via a line 14 and queued in a store 15 in the SMU OPB. Other higher priority DBA bandwidth requests are queued in a store 16. When bandwidth is available, as determined by a resource allocator 17, acknowledgements are sent via a server 18 and a line 19 to the resource allocator 10 in the SMU IPA. The resource allocator 17 includes a dedicated RAM table 20 for ABR messages which is additional to RAM storage (not shown in detail) for the other DBA bandwidth requests. Bandwidth requests appertaining to the input SMU's are designated in column 21 and bandwidth units appertaining to each SMU listed is as shown in column 22. Thus it can be seen that the SMU IPA has requested four units of bandwidth but has so far received a zero allocation. Similarly it can be seen that the input SMU IPB has been allocated seven units of bandwidth. This corresponds to the contents of RAM table 25 in the SMU IPB. It will be appreciated that the stores 4, 5 and 6 in the SMU IPB communicate via servers 26, 27 and 28 under control of a resource allocator 29 with SMU's on the 'output side' of the switch. It will also be appreciated that the SMU OPA on the 'output side' of the switch is provided with a store 30 for ABR requests and a store 31 for other DBA requests, the stores 30 and 31, which correspond with the stores 15 and 16 respectively of the SMU OPB and are operated under control of a server 32a corresponding to the server 18. Similarly a resource allocator 32b is provided in the SMU OPA which includes a RAM table 33 shown in detail, in which are stored details of the number of units of bandwidth allocated as shown in a column 34 and the input SMU's to which they relate as shown in a column 35, the server 32a being controlled by the resource allocator 32b.

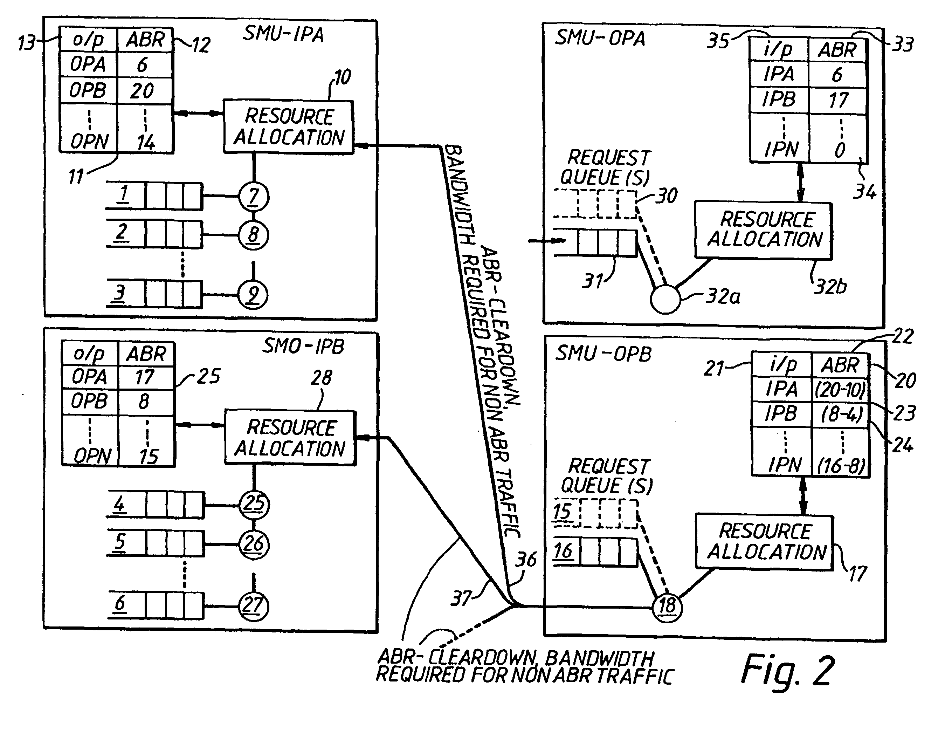

It is important to appreciate that allocated ABR bandwidth can be cleared down to facilitate the transmission of higher priority DBA traffic and the manner in which this is effected is shown schematically in Figure 2 wherein corresponding parts of the system bear, where appropriate, the same numerical designations.

Referring now to Figure 2, as shown schematically by means of a line 36, clear-down requests are routed to all resource allocators that have acting ABR traffic on OPB including the resource allocator 10 from the server 18 when bandwidth is required by the SMU OPB for non ABR traffic, whereby the transmission of ABR traffic is temporarily decreased in rate. Similarly clear-down signals are sent as appropriate from the server 18 via a line 37 to the resource allocator 28 for a similar purpose as required by the SMU IPB.

Various modifications may be made to the arrangements shown without departing from the scope of the invention and, for example, any number of SMU's may be provided on the input of a switch with a corresponding number on the 'output side' of the switch in accordance with the size of the system.

## Claims

1. An asynchronous transfer mode, ATM, communication system having dynamic bandwidth allocation DBA, comprising storage means (1-3; 15,30) for DBA traffic, said storage means includes dedicated storage means for available bit-rate, ABR, traffic; the system providing for the allocation of ABR bandwidth requests after all other DBA bandwidth allocations have been satisfied, and being **characterised by** the provision of means (30; 15) for queuing ABR traffic until the required bandwidth therefor becomes available; and resource allocation means (10,28; 32b, 17) capable of determining bandwidth available for data transmission; said resource allocation means including means (32b; 17) for allocating bandwidth to said ABR traffic in dependence upon its availability and for clearing down ABR traffic and the bandwidth allocated thereto; but not yet fully used, when said allocated bandwidth is required for other DBA traffic of higher priority than the ABR traffic; thereby temporarily decreasing the transmission rate of ABR traffic.

2. An ATM communication system as claimed in Claim 1, **characterised by** the provision of a plurality of statistical multiplexer unit, SMUs, on an "input side" of a switch (IPA; IPB), and a plurality of SMUs (OPA; OPB) on an "output side" of the switch; each of the "input side" SMUs (IPA; IPB) comprising a plurality of stores (1, 2,3; 4,5,6), one for each "output side" SMU, in which ATM cells for transmission across the switch are stored; each store (1,2,3; 4,5,6) on the "input side" of the switch being operatively associated with a respective server (7, 8, 9; 26, 27, 28), and the servers being controlled in accordance with a DBA protocol by respective resource allocation means (10; 28) for each "input side" SMU.

3. An ATM communication system as claimed in Claim 2, **characterised in that** each of the resource allocation means (10; 28) includes a respective RAM table (11; 25) for storing data appertaining to the bit rate or bandwidth allocated to ABR traffic for transmission to each of the "output side" SMUs.

4. An ATM system as claimed in Claim 3, **characterised in that** each SMU on the " output side" of the switch includes an ABR request store (33; 20) which forms part of an "output side" resource allocation means (32b; 17), within which ABR request store ABR bandwidth requests are stored; the " output side" resource allocation means (32b; 17) being arranged to provide acknowledgement signals, indicative of resource availability, which acknowledgement signals are transmitted across the switch to the "input side" resource allocation means (10; 29) so as to initiate data transmission across the switch.

5. An ATM communication system as claimed in Claim 4, **characterised in that** the acknowledgement signals are arranged to indicate, in respect of each " output side" SMU, when ABR bandwidth has become available and also when allocated ABR bandwidth should be withdrawn for the time being, thereby to make available bandwidth for other higher priority DBA traffic.

## Patentansprüche

1. Kommunikatiönssystem mit asynchronem Übertragungsmodus, ATM, das eine dynamische Bandbreitenzuweisung, DBA, besitzt und Speichermittel (1-3; 15, 30) für DBA-Verkehr umfaßt, wobei die Speichermittel Speichermittel enthalten, die einem Verkehr mit verfügbarer Bitrate, ABR, zugeordnet sind; wobei das System die Zuweisung von ABR-Bandbreitenanforderungen vorsieht, nachdem alle anderen DBA-Bandbreitenzuweisungen erfüllt worden sind, und **gekennzeichnet ist durch** das Vorhandensein von Mitteln (30; 15) für die Anordnung von ABR-Verkehr in einer Warteschlange, bis die erforderliche Bandbreite hierfür verfügbar wird; und von Betriebsmittel-Zuweisungsmitteln (10, 28; 32b, 17), die die Bandbreite bestimmen können, die für die Datenübertragung verfügbar ist; wobei die Betriebsmittel-Zuweisungsmittel Mittel (32b; 17) enthalten, die dem ABR-Verkehr Bandbreite in Abhängigkeit von ihrer Verfügbarkeit zuweisen und ABR-Verkehr und die ihm zugewiesene Bandbreite, die jedoch noch nicht vollständig verwendet wird, entnehmen, wenn die zugewiesene Bandbreite für anderen DBA-Verkehr mit höherer Priorität als der ABR-Verkehr erforderlich ist; wodurch die Übertragungsrate des ABR-Verkehrs vorübergehend gesenkt wird.

2. ATM-Kommunikationssystem nach Anspruch 1, **gekennzeichnet durch** das Vorhandensein mehrerer statistischer Multiplexer-Einheiten, SMUs, auf einer "Eingangsseite" eines Schalters (IPA-IPB) und mehrerer SMUs (OPA; OPB) auf einer "Ausgangsseite" des Schalters; wobei jede der "eingangsseitigen" SMUs (IPA; IPB) mehrere Speicher (1, 2, 3; 4, 5, 6) umfaßt, einen für jede "ausgangsseitige" SMU, in denen ATM-Zellen für die Übertragung **durch** den Schalter gespeichert sind; wobei jeder Speicher (1, 2, 3; 4, 5, 6) auf der "Eingangsseite" des Schalters einem entsprechenden Server (7, 8, 9; 26, 27, 28) funktional zugeordnet ist und die Server in Übereinstimmung mit einem DBA-Protokoll **durch** entsprechende Betriebsmittel-Zuweisungsmittel (10; 28) für jede "eingangsseitige" SMU gesteuert werden.

3. ATM-Kommunikationssystem nach Anspruch 2, **dadurch gekennzeichnet, daß** jedes der Betriebsmittel-Zuweisungsmittel (10; 28) eine entsprechende RAM-Tabelle (11; 25) zum Speichern von Daten bezüglich der Bitrate oder der Bandbreite, die dem ABR-Verkehr für die Übertragung an jede der "ausgangsseitigen" SMUs zugewiesen ist, umfaßt.

4. ATM-System nach Anspruch 3, **dadurch gekennzeichnet, daß** jede SMU auf der "Ausgangsseite" des Schalters einen ABR-Anforderungsspeicher (33; 20) enthält, der einen Teil eines "ausgangsseitigen" Betriebsmittel-Zuweisungsmittels (32b; 17) bildet, wobei in dem ABR-Anforderungsspeicher ABR-Bandbreiten-Anforderungen gespeichert sind; wobei die "ausgangsseitigen" Betriebsmittel-Zuweisungsmittel (32b; 17) so beschaffen sind, daß sie Quittierungssignale erzeugen, die eine Betriebsmittelverfügbarkeit angeben und durch den Schalter an die "eingangsseitigen" Betriebsmittel-Zuweisungsmitteln (19; 29) übertragen werden, um eine Datenübertragung durch den Schalter einzuleiten.

5. ATM-Kommunikationssystem nach Anspruch 4, **dadurch gekennzeichnet, daß** die Quittierungssignale so beschaffen sind, daß sie in bezug auf jede "ausgangsseitige" SMU angeben, wann ABR-Bandbreite verfügbar geworden ist, und außerdem, wann zugewiesene ABR-Bandbreite unter den gegenwärtigen Umständen weggenommen werden sollte, um dadurch Bandbreite für anderen DBA-Verkehr mit höherer Priorität verfügbar zu machen.

## Revendications

1. Système de communication ATM en mode de transfert asynchrone ayant une allocation dynamique de largeur de bande DBA comprenant un moyen de stockage (1-3 ; 15-30) pour le trafic DBA, ledit moyen de stockage contient un moyen de stockage dédié au débit disponible pour le trafic ABR ; le système prévoyant l'allocation de largeur de bande aux demandes ABR lorsque toutes les autres demandes d'allocations de largeur de bande DBA ont été satisfaites, et étant **caractérisé par** la prévision de moyens (30 ; 15) pour la mise en file d'attente du trafic ABR jusqu'à ce que la largeur de bande qui lui est nécessaire soit disponible ; et des moyens d'allocation des ressources (10, 28 ; 32b, 17) capables de déterminer la largeur de bande disponible pour la transmission des données ; lesdits moyens d'allocation des ressources comprenant des moyens (32b ; 17) pour allouer la largeur de bande audit trafic ABR en fonction de la disponibilité de la bande et pour annuler le trafic ABR et la largeur de bande qui lui a été allouée, mais pas encore complètement utilisée, quand ladite bande passante allouée est requise pour un autre trafic DBA de priorité plus élevée que le trafic ABR ; en diminuant temporairement de la sorte le débit de transmission du trafic ABR.

2. Système de communication ATM selon la revendication 1, **caractérisé par** la prévision d'une pluralité d'unités de multiplexage statistique SMU, du "côté entrée" d'un commutateur (IPA ; IPB), et d'une pluralité de SMU (OPA ; OPB) du "côté sortie" du commutateur ; chacune des SMU du "côté entrée" (IPA ; IPB) comprenant une pluralité de mémoires (1, 2, 3 ;4, 5, 6) une pour chaque SMU "du côté sortie", dans laquelle les cellules ATM à transmettre par traversée du commutateur sont stockées ; chaque mémoire (1, 2, 3 ;4, 5, 6) du "côté entrée" du commutateur étant fonctionnellement associée avec un serveur correspondant (7, 8, 9 ; 26, 27, 28), et les serveurs étant contrôlés selon un protocole DBA par des moyens respectifs d'allocation des ressources (10 ; 28) pour chaque SMU du "côté entrée".

3. Système de communication ATM selon la revendication 2, **caractérisé en ce que** chacun des moyens d'allocation des ressources (10 ; 28) comporte une table en mémoire vive respective (11 ; 25) où sont stockées des données correspondant au débit binaire ou à la largeur de bande alloué au trafic ABR pour sa transmission à chacune des SMU du "côté sortie".

4. Système ATM selon la revendication 3, **caractérisé en ce que** chaque SMU du "côté sortie" du commutateur comporte une mémoire des demandes ABR (33 ; 20) qui fait partie d'un moyen d'allocation des ressources du "côté sortie" (32b ; 17), à l'intérieur de laquelle sont stockées les demandes de largeur de bande ABR ; le moyen d'allocation des ressources du "côté sortie" (32b ; 17) étant organisé pour former des signaux d'accusé de réception, indicatifs de la disponibilité des ressources, lesquels signaux d'accusé de réception sont transmis par traversée du commutateur vers le moyen d'allocation des ressources du "côté entrée (10 ; 29) de manière à lancer la transmission des données par traversée du commutateur.

5. Système ATM selon la revendication 4, **caractérisé en ce que** les signaux d'accusé de réception sont organisés pour indiquer, par rapport à chaque SMU du "côté sortie", quand la largeur de bande ABR est devenue disponible et quand la largeur de bande ABR allouée devrait être retirée, dans les conditions actuelles, de manière à rendre la largeur de bande disponible pour un autre trafic DBA de priorité plus élevée.
